Europäisches Patentamt

European Patent Office

Office européen des brevets

(11) Publication number: **0 349 289**
**A1**

# EUROPEAN PATENT APPLICATION

(21) Application number: **89306552.4**

(22) Date of filing: **27.06.89**

(51) Int. Cl.5: **G 01 B 3/10**

(30) Priority: **27.06.88 GB 8815238**

(43) Date of publication of application:
**03.01.90 Bulletin 90/01**

(84) Designated Contracting States: **DE ES FR IT**

(71) Applicant: **ROYAL COLLEGE OF ART**
**Kensington Gore**
**London SW7 (GB)**

(72) Inventor: **De Vlam, Ronald**
**Top Flat 15 Cliff Road**
**London NW1 9AN (GB)**

(74) Representative: **Ford, Michael Frederick et al**
**MEWBURN ELLIS 2 Cursitor Street**
**London EC4A 1BQ (GB)**

(54) **Measuring device.**

(57) A measuring device has means (14) to determine distances and a visual display (32) arranged to display lines representing the distances. Preferably these are displayed so as to form a pictorial representation of the distances which have been determined. The directions of distances may be input through manually operable keys (64,66).

Fig 1

## Description

### MEASURING DEVICE

This invention relates to the field of electronic devices for measuring distances.

A number of devices have been described which combine the measurement of length with electronic circuitry so as to provide a digital display of the distance measured and possibly carry out calculations utilising the distances measured. Examples are shown in US patent 4551847 (Caldwell), European published patent application 169701 (Fisco Electronics) and PCT published application WO 88/00776 (Care). In such devices the visual display has been a digital display of the distance determined.

According to the present invention there is provided a measuring device having means to determine distance and generate electronic data representing that distance, and means to store a plurality of such representations of distance, characterised by visual display means arranged to display a plurality of lines respectively representing the distances stored. The visual display can serve to provide the user with a visual analogue record that a distance has been measured.

Preferably the device includes means to store data indicating a direction for each distance and the visual display means is arranged to display each line at an orientation representing the direction of the distance. Preferably also the visual display means is arranged to display each line at a position extending from the end of another line representing a previously measured distance so that the lines can form a drawing of the article. To assist this it is desirable that there should be control means enabling a user to reposition a line if required.

A further preferred feature is that each line shown by the visual display means is shown with a length proportional to the distance which it represents.

In a fairly basic form the device could for example be able to store a plurality of distances and assignment of those distances to either of two orthogonal directions (for example length and width). The visual display means would then be arranged to display the lines extending in each of two perpendicular directions, for instance length being displayed as horizontal lines and width being displayed as vertical lines.

In a preferred arrangement the device has means to attribute any of three orthogonal directions to distances and the visual display means displays lines extending in either of two perpendicular directions or at an angle inclined to those directions, according to the direction of the distance represented by each line. Thus, distances can be designated as length, height or width and the visual display means can depict the lines as in a two dimensional drawing, for instance with length shown horizontally, height shown vertically and width shown at an inclined angle.

By means of the device of this invention a user will be able to determine a succession of distances and as the distances are determined a line representing each distance will appear on the visual display means. These lines progressively build up a "drawing", providing the user with an analogue record of which measurements have already been made, with one line for each distance stored.

The means for determining distance may provide a direct mechanical read-out, for example by including a conventional measuring tape. Alternatively or additionally, however, the device may include an electronic digital display. Control means desirably enable a user to recall to the digital display the value of each distance which has been determined and preferably any distance which is recalled to the digital display is simultaneously highlighted on the visual display means, for instance by the line concerned flashing or in some other way being made different from other lines.

The means for determining distance will generally be able to do so without determining the direction of the distance. Direction can be separately input to the device by the user.

Thus a preferred form of the invention provides a measuring device having:
means to determine distance and generate electronic data representing such distance,
means to input data indicating any of three directions for a distance,
means to store a data representing a plurality of distances and their directions (preferably at least two distances for each direction),
visual display means arranged to display a line representing each distance, at any of three orientations respectively associated with the said three directions and with each line extending from the end of another line,
a digital display for at least one distance, control means to recall any stored distance to the digital display, with the associated line on the visual display being rendered distinguishable from the other lines thereon.

The means to determine distance and generate electronic data representing such distance may include an extensible element such as a measuring tape to be drawn out from a body of the device, together with means to sense the length of such element drawn out from the device. A possibility for this is to use a variable resistor or potentiometer.

In a separate aspect therefore this invention provides a measuring device comprising a body, an extensible element to be drawn from a storage reel in the body, a variable resistor or potentiometer arranged to be varied by drawing out of said element, means to observe the resistance of the resistor or voltage of the potentiometer, and to generate digital electronic data therefrom representing the extended length of the element.

An alternative means to determine distance and generate electronic data representing the distance would be an ultrasonic ranging system such as described in the abovementioned EP 169701.

The means for determining distance will generally be able to determine distances within a range which extends to beyond 1 metre. Examples would be a range from 5mm to 2 metres or more for a tape measure, a range from 0.5 metre to 30 metres for an ultrasonic ranging device, or 1.5 metres to 100 metres for another ultrasonic ranging device.

A tape measure embodying this invention will now be described with reference to the accompanying drawings in which:

Fig. 1 is a perspective view of the tape measure

Fig. 2 is a side view

Fig. 3 is an underneath view

Figs. 4 to 9 show a sequence of displays.

Fig. 10 is a diagrammatic cross section through the tape spool illustrating connection to a potentiometer

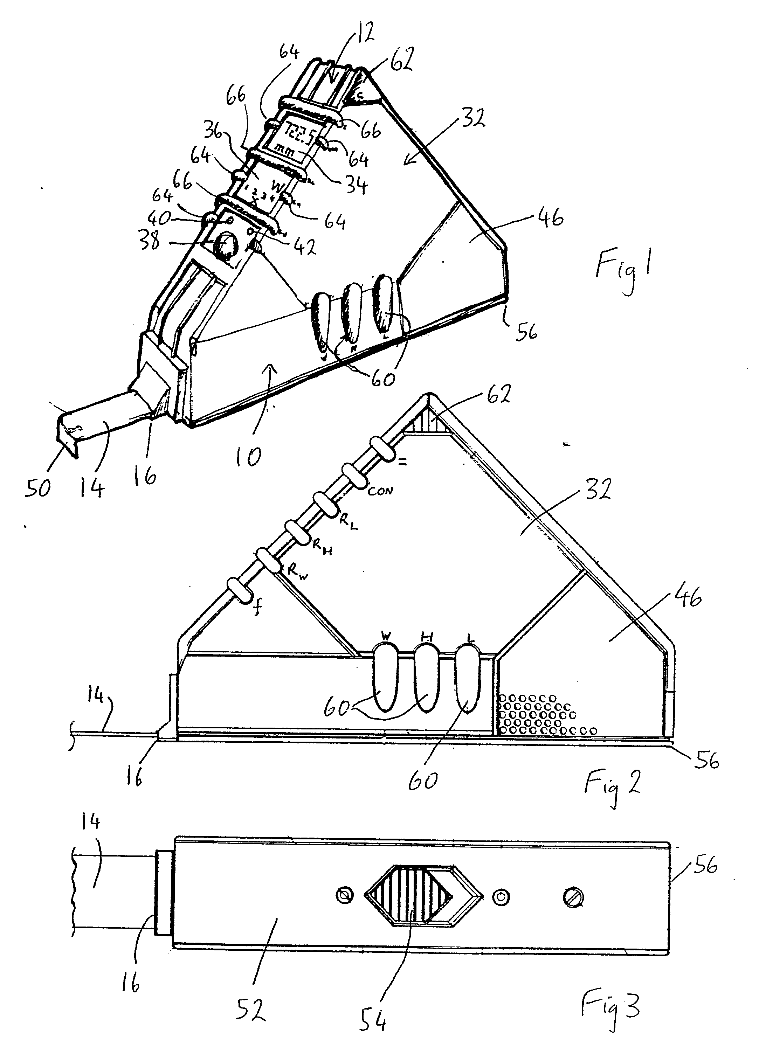

The tape measure shown in the drawings has a case with approximately the shape of a triangular prism, as best seen from Fig. 1. It includes front face 10 and narrow inclined face 12. A measuring tape 14 can be drawn out through a mouth 16 of the case. Within the case the measuring tape is coiled on a spool equipped with a return spring as is conventional for tape measures. This spool is coupled at its axis to the operating shaft of a multi-turn precision potentiometer so that as the tape is drawn out of the tape measure and the spool is thereby rotated, the operating shaft of the potentiometer rotates with the spool and so varies the setting of the potentiometer.

A possible constructional arrangement for this is shown by Fig. 10. A wall 20 of the case structure carries a sleeve 22 which provides a mounting for the return spring, not shown, and accommodates the potentiometer 24. The tape spool 26 is journalled on this sleeve and on another wall 28 of the case. The spool is coaxial with the operating shaft 30 of the potentiometer 24 and fastened to it so that both rotate together.

Fitted to side face 10 of the case is a visual display screen 32 which is a large liquid crystal display subdivided into an array of pixels. Fitted to the narrow face 12 of the case are two LCD displays 34,36. The display 34, termed the "digital display" is used to display numbers and whether their units are metric or feet and inches. The display 36 is used to display a letter W, L or H over each of the numerals 1, 2, 3, 4 and to display an arithmetical symbol (+, -, x or ÷) below. Also fitted to the case are an on/off button 38, LED's 40,42 which illuminate to indicate that the device is turned on or that battery power is low respectively. There are also a number of operating switches, which will be described in more detail below. The panel 46 and a corresponding panel on the opposite face of the case are hinged and can be squeezed towards each other. When this is done they apply a brake to lock the measuring tape against extension or retraction. Simultaneously they operate a switch concealed within the case.

Electronic circuitry is accommodated within the case. This circuitry is a microprocessor-based computer circuit with ROM, RAM, and input ports which are used to allow the various switches to serve as information inputs to the microprocessor circuit. The circuitry also includes an analogue to digital converter to give a digital value for the setting of the above mentioned precision potentiometer coupled to the tape spool. It further includes output devices to drive the various LCD displays. The microprocessor circuit is of conventional architecture and will therefore not be described in detail. The various switches serving as information inputs may be connected to individual lines of an input port and read successively at regular intervals. Alternatively they may be wired and read in the manner of a small keyboard. A battery to power the circuitry is also accommodated in the case.

In order to determine a distance the tape 14 is used in a conventional way. It is pulled out from the tape measure case and positioned against a distance to be measured, with the hook 50 at the extremity of the tape at one end of the distance to be measured and the mouth 16 of the case at the other end of the distance to be measured. The distance can then be read visually from the tape measure itself but also the microprocessor circuit repeatedly reads the current setting of the potentiometer, and derives from this a value for the amount by which the tape has been extended from the case, in other words a numerical value for the distance being measured. This value is usually displayed on the digital display 34.

Recessed into the bottom surface 57 of the case is a switch 54 slidable between two positions. In the first position, as shown in Fig. 3, the distance value obtained by the microprocessor circuit from the potentiometer setting is simply the length along tape 14 from the mouth 16 of the case to the hook 50. When the switch is moved to its other position, slid to the right as seen in Fig. 3, a constant value corresponding to the length of the case is added so that the distance displayed at the digital display corresponds to the distance from the hook 50 to the edge 56 of the tape measure case.

As so far described, the tape measure has the functions of previously described "electronic tape measures" where there is a conventional tape which can be used to measure length, also electronic detection of the extent by which the tape has been extended, and a digital display of this length making it unnecessary to read directly from the scale of the tape. Unlike other electronic tape measures, however, the tape measure shown in the drawings has the visual display screen 32 mentioned above. The function of this will be described below.

As briefly mentioned above, there are various operating switches on the case. There are three switches 60 low down at the centre and designated W, H, and L because they are associated with width, length and height respectively. At the apex is a switch 62 which performs a "clear" function. At the edge where faces 10 and 12 meet there are six switches 64,66 designated from top to bottom as:

```
" = "        for "equals" or execute

"CON"        for convert

"R " for recall length  ⎫
   L                     ⎪
                         ⎬   Recall switches
"R " for recall height   ⎪
   H                     ⎭
"R " for recall width
   W

"f"          for function
```

All of these switches are membrane switches which are normally open and closed by finger pressure on them.

The various switches on face 10 are all duplicated on the opposite face of the case to enable operation by either a right handed or a left handed user. Thus for instance the switches 64 on the upper edge of the front face 10 are duplicated by switches on the corresponding edge of the rear face. Pressing any switch on the rear face has exactly the same effect as pressing the corresponding switch on the front face.

The switches 66 are formed to have the appearance of ribs extending across the narrow face 12 of the case. These switches can be operated by pressure at either the front edge or the rear edge of this narrow face 12 in exactly the same fashion as the switches 64 which are duplicated at each edge but do not extend fully across the narrow face 12.

For the sake of convenience the operation of the device will be described with reference to the switches on the front face 10 only.

To make use of the visual display screen 32 when the user has drawn out the measuring tape to a distance which is to be recorded, so that the appropriate distance is shown on the digital display, the user will press one of the three switches 60 (W, H or L). This will cause the microprocessor to store the distance in memory as a length, a width or a height depending on which of the three switches was pressed. At the same time the microprocessor will darken appropriate pixels of the screen 32 so as to display a line representing the distance which has just been stored in memory. If the distance has been stored as a length the line will be horizontal, if stored as a height the line will be vertical and if stored as a width the line will extend at an angle of 45° to the horizontal.

A further distance can then be measured and stored in memory in the same way. When the appropriate switch is pressed to store the distance in memory a second line will be displayed on the screen at a default position extending from one end of the first line. Further distances can be measured in the same way and each stored in memory by pressing one of the three buttons 60 (W, H or L). Each time this happens a further line will appear on the display screen 32 extending from one end of a line already present. Measuring of distances and storing them in memory can be continued up to a maximum of four lengths, designated $L_1$, $L_2$, $L_3$, $L_4$, four widths $W_1$, $W_2$, $W_3$, $W_4$, and four heights $H_1$, $H_2$, $H_3$, $H_4$.

The lines which appear on the visual display screens each time a distance is recorded are intended to build up a "drawing" or diagram of the measurements which have been taken. Each line will appear on the screen at a default position extending from one end of the line added previously. It may be that this is not the desired position and there is therefore facility for the user to change the position of the line. For this the tape brake 46 is applied (if not already on). As mentioned above this also operates a switch enabling the microprocessor to detect that the brake is on. While the tape brake is applied the same switch 60 as was used to store the distance is pressed again one or more times. Each time the switch is pressed the line on the screen 32 moves to another possible position and it can be moved progressively through all possible positions until the user finds the desired position or failing this the line comes back to the original default position.

When a line is repositioned in this way, the first change of position will be for the line to extend from the same point but in the reverse sense. The next change will move it to another possible position (the end of another line already on the screen) after which the next change will reverse the sense in which it extends from that point. The following change will move it to another possible position and so on with presses of the switch 60 alternately changing the sense in which the line extends from a point and moving the line to another point.

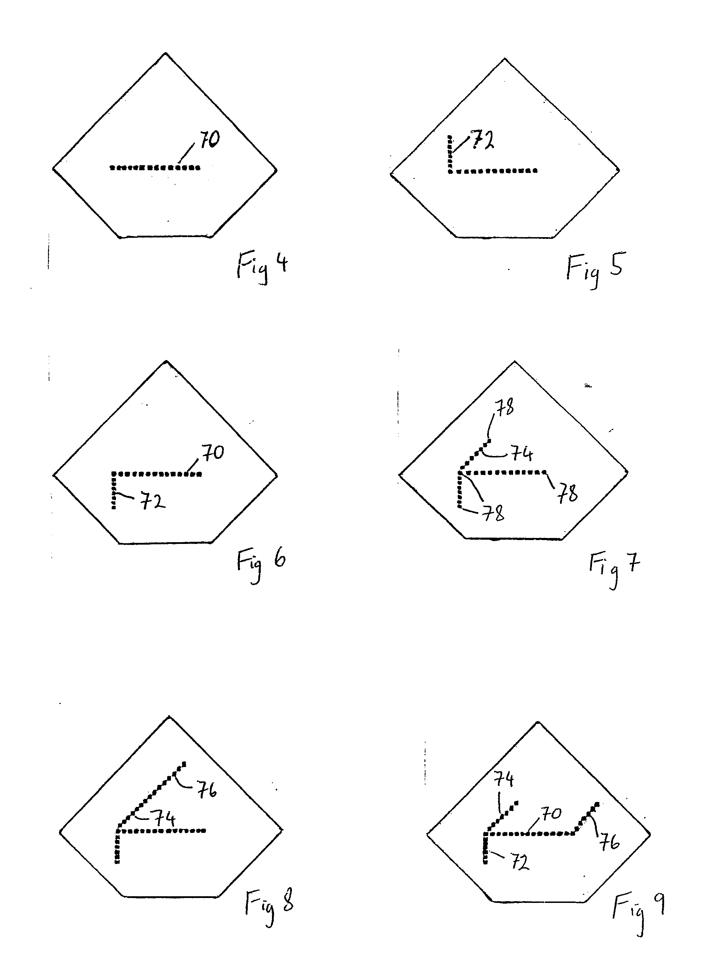

An example of the procedure is shown by Figs 4 to 9. Initially the user commences with no distances stored in memory and the display screen blank. A measurement is made and the L switch depressed to record this as a length $L_1$. A horizontal line 70 appears on the display screen 32 as shown by Fig 4. Then a second distance is measured and the H switch pressed to record it as height $H_1$. This appears as vertical line 72 on the display screen, extending from one end of the existing horizontal line, as shown by Fig. 5. The user is not satisfied with this because the line has been shown extending upwardly rather than downwardly. He therefore applies the tape brake 46 (if it is not already applied) and presses the H switch again which causes the line 72 to be repositioned to extend downwardly as shown by Fig 6.

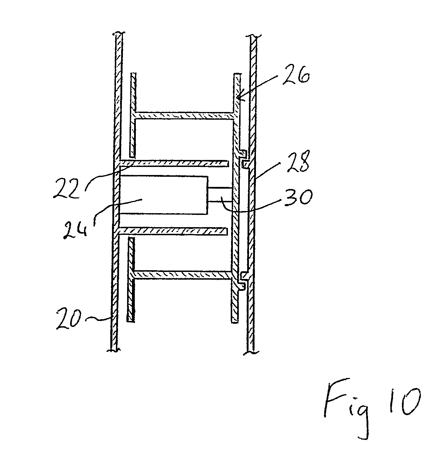

Next a width $W_1$ is measured and stored by pressing the W switch whereupon a line 74 extending at an inclined angle appears on the screen 32 as shown by Fig 7. The user now measures a second width $W_2$ and

records this in memory by pressing the W switch. A line 76 representing this width appears on the screen extending from the end of the line 74 which appeared previously. Because this was also a width, the line 76 is depicted as a continuation of the line 74 as seen in Fig. 8. This is not what the user requires and the line is therefore repositioned by applying the tape brake 46 (if not already applied) and pressing the W switch repeatedly until the line 76 appears at the position shown in Fig 9. Pressing the W switch repeatedly is able to cause the line to move to any of the four end positions 78 previously on the screen and to extend in either sense (that is to say upwardly to the right or downwardly to the left from any of those four positions).

The lines displayed on the screen 32 are automatically depicted with lengths which are approximately proportional to the measured lengths, the microprocessor automatically calculating a suitable scale. If any measurement is stored which would necessitate a line going off the edge of the screen, the microprocessor automatically recalculates the scale so as to reduce the lengths of the lines previously on the screen.

The various measurements which are stored in memory can be recalled to the digital display 34 at any time by use of the recall switches. If the $R_w$ switch is pressed a width is recalled, and the display 36 then shows which width value has been recalled by displaying a W above the appropriate one of the numbers 1, 2, 3 and 4. Repeatedly pressing the $R_w$ switch recalls each of the widths in turn; similarly pressing the $R_H$ switch repeatedly recalls each of the four heights by turn and pressing the $R_L$ switch repeatedly recalls each of the four lengths by turn.

When any measurement has been recalled to the digital display 34 the appropriate line on the visual display screen 32 flashes on and off so as to be readily distinguishable from the other lines on the display.

Any measurement recalled to the digital display 34 can be manipulated in various ways. Pressing the "CON" switch will cause a figure displayed in metric units (say millimetres) to be converted to feet and inches and vice versa.

Pressing the "clear" switch 62 twice in succession will clear the displayed measurement from memory.

The "f" and "equals" switches enable arithmetic calculations to be carried out. The "f" switch serves to select a function and to cause the appropriate symbol ($+$, $-$, x or $\div$) to appear in the lower part of display 36. The "equals" switch causes any calculation to be carried out and the result displayed on display 34.

As an example of performing arithmetic calculations assume that the user wishes to multiply the first length $L_1$ by the second width $W_2$. The following actions are carried out.

Press $R_L$ one or more times to display the value of $L_1$ on display 34 (L appears above 1 on display 36)

Press "f" one or more times to display the multiplication symbol

Press $R_w$ one or more times to display the value of $W_2$ on the digital display 34 (W appears above 2 on display 36)

Press "=" and the result will be displayed on the digital display 34.

Instead of using stored values in arithmetic manipulations, calculations can be carried out utilising the amount which the tape is currently extended. At the proper point in the calculation sequence the tape is extended the appropriate amount and the tape brake 46 is applied. This brings to the digital display 34 the amount by which the tape has been extended and allowing that value to be used in calculation. Such directly input values can be manipulated together with values from the memory.

For example, suppose that the user desires to divide $L_1$ by 90mm. The following operations would be carried out:

Press $R_L$ until L appears above 1 on display 36 and its value on the digital display 34

Press "f" until the division symbol is displayed

Extend the tape to 90mm, and apply the tape brake 46 whereupon the measurement 90mm will appear on the digital display 34

Press "=", the digital display will show the result.

The embodiment described above has been given by way of example only and various modifications are possible. In particular, different arrangements could be employed for the device to receive data as to the direction of any distance. One possibility is to employ a set of keys resembling cursor control keys of a computer keyboard; another would be for the microprocessor to "assume" a direction, so requiring the user to take measurements according to a predetermined sequence; yet another would be for the microprocessor to "assume" a direction as a default, with the user having the opportunity to override the default assumption if desired.

As described above the tape brake operates a switch which is an input to the microprocessor: instead of this the switch could be separated from the brake as a user-operable "hold button".

## Claims

1. A measuring device having means to determine distance and generate electronic data representing that distance, and means to store a plurality of such representations of distance, characterised by visual display means arranged to display a plurality of lines respectively representing the distances stored.

2. A device according to claim 1 which includes means to store data indicating a direction for each distance and the visual display means is arranged to display each line at an orientation representing the direction of the distance.

3. A device acoording to claim 2 wherein the visual display means displays each line at a position extending from the end of another line representing a previously measured distance so that the lines can form a drawing of the article.

4. A device according to claim 3 including control means enabling a user to reposition a line on the visual display.

5. A device according to claim 1 wherein the visual display means displays each line with a length proportional to the distance which it represents.

6. A device according to claim 2 which has means to attribute data indicating any of three orthogonal directions to distances determined by the device and the visual display means displays lines extending in either of two perpendicular directions or at an angle inclined to those directions, according to the direction attributed to the distance represented by each line.

7. A device according to claim 1 wherein the means for determining distance comprise a measuring tape.

8. A device according to claim 1 comprising an electronic digital display and control means enabling a user to recall to the digital display the values of distances which have been determined.

9. A device according to claim 1 having
means to input data indicating any of three directions and each distance determined,
means to store data representing a plurality of distances and their directions,
a digital display for at least one distance, and control means to recall stored distances to the digital display,
the said visual display means being arranged to display a line representing each distance, at any of three orientations respectively associated with the said three directions and with each line extending from the end of another line.

10. A device according to claim 9 wherein the visual display distinguishes any line whose associated distance is recalled to the display.

Fig 1

Fig 2

Fig 3

Fig 4

Fig 5

Fig 6

Fig 7

Fig 8

Fig 9

Fig 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-4 506 336 (E.A. HIRD) <br> * Column 4, line 61 - column 6, line 25; column 16, line 26 - column 18, line 26; figures 1-3,17-19 * | 1 | G 01 B 3/10 |
| A | | 2,5,7,8,10 | |
| | --- | | |
| Y | GB-A-1 534 971 (FLORIN LTD) <br> * Page 2, lines 14-16; figures * | 1 | |
| | --- | | |
| A | US-A-4 213 035 (SHARP) <br> * Figures; abstract * | 1 | |
| | ----- | | |

TECHNICAL FIELDS SEARCHED (Int. Cl.5)

G 01 B 3

The present search report has been drawn up for all claims

| Place of search | Date of completion of the search | Examiner |
|---|---|---|
| THE HAGUE | 04-10-1989 | RAMBOER P. |